(19) Europäisches Patentamt
European Patent Office
Office européen des brevets

(11) **EP 2 790 257 A1**

(12) **EUROPEAN PATENT APPLICATION**
published in accordance with Art. 153(4) EPC

(43) Date of publication:
**15.10.2014 Bulletin 2014/42**

(51) Int Cl.:
*H01M 8/06* *(2006.01)*    *C25B 1/04* *(2006.01)*
*H01M 8/04* *(2006.01)*    *H01M 8/12* *(2006.01)*
*H01M 8/10* *(2006.01)*

(21) Application number: **12856447.3**

(22) Date of filing: **30.10.2012**

(86) International application number:
**PCT/JP2012/077930**

(87) International publication number:
**WO 2013/084623 (13.06.2013 Gazette 2013/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.12.2011 JP 2011266178**

(71) Applicant: **Konica Minolta, Inc.
Tokyo 100-7015 (JP)**

(72) Inventor: **UEYAMA Masayuki
Tokyo 191-8511 (JP)**

(74) Representative: **HOFFMANN EITLE
Patent- und Rechtsanwälte
Arabellastrasse 4
81925 München (DE)**

(54) **FUEL CELL SYSTEM**

(57)    A fuel cell system, provided with: a fuel-generating material which generates a fuel by a chemical reaction and which can be regenerated by a reverse reaction of the aforementioned chemical reaction; a first fuel cell in which gas is circulated with respect to the fuel-generating material; and a second fuel cell for generating power using a fuel gas introduced from an external gas supply source. The amount of heat generated in the second fuel cell performing a power generation operation is transmitted to the first fuel cell preforming an electrolysis operation.

Fig. 6

**Description**

**Technical Field**

The present invention relates to a fuel cell system that can generate electric power by using fuel gas introduced from outside and that in addition can store electric power.

**Background Art**

A household fuel-cell cogeneration system (see, for example, Patent Document 1 listed below) generates electric power with a fuel cell by using town gas as fuel. Not only the generated electric power can be consumed in a household, but also the heat generated in the fuel cell during power generation can be used for hot water supply and heating. A household fuel-cell cogeneration system permits electric power to be generated and consumed at the same site, thus being free from transmission loss and allowing efficient use of the heat generated during power generation; it is thus a high-energy-efficiency, low-environmental-impact system.

Today, to realize a household fuel-cell cogeneration system that keeps operating even in the event of a power outage, it is proposed to install a household fuel-cell cogeneration system in combination with a storage cell (see, for example, Non-patent Document 1 listed below).

**List of Citations**

**Patent Literature**

Patent Document 1: Japanese Patent Application Publication No. 2007-273252.

**Non-Patent Literature**

Non-patent Document 1: "A 'Power-Outage Spontaneous Operation System' Developed for 'ENE-FARM'-line Household Fuel Cells," November 9, 2011, an on-line article at the WEB site of SEIKO ELECTRIC Co., Ltd., <URL: http://www.seiko-denki.co.jp/news/%E5%81%9C%E9%9B%BB%E6%99%82%E8%87%AA%E7%AB %8B%E9%81%8B%E8%BB%A2%E5%AF%BE%E5%BF%9C%E3%82%B7%E3% 82%B9%E3%83%86%E3%83%A0.pdf>

**Summary of the Invention**

**Problem to be Solved by the Invention**

Inconveniently, however, with the system proposed in Non-patent Document 1, even when excess electric power is generated by a household fuel cell during power generation, the excess electric power cannot be stored in a lead storage cell.

Against the background discussed above, an object of the present invention is to provide a fuel cell system that can store electric power efficiently even when excess electric power is generated during power generation using fuel gas introduced from outside.

**Means for Solving the Problem**

To achieve the above object, according to an aspect of the present invention, a fuel cell system includes: a fuel-generating material that generates fuel through a chemical reaction and that can be regenerated through the reverse reaction of the chemical reaction; a first fuel cell that circulates gas to the fuel-generating material and back; and a second fuel cell that generates electric power by using fuel gas introduced from an external gas supply source. Here, the heat generated in the second fuel cell in power generation operation is transferred to the first fuel cell in electrolysis operation. There may be provided a single first fuel cell or a plurality of first fuel cells. Likewise, there may be provided a single second fuel cell or a plurality of second fuel cells.

With this configuration, when excess electric power is being generated by the second fuel cell, the excess electric power can be stored through electrical charging achieved by regenerating the fuel-generating material by making the first fuel cell perform electrolysis operation. Moreover, the heat generated in the second fuel cell during power generation operation is transferred to the first fuel cell in electrolysis operation and thus absorbing heat. This improves charging efficiency.

2

**Advantageous Effects of the Invention**

With a fuel cell system as described above, when excess electric power is generated during power generation using fuel gas introduced from outside, the excess electric power can be stored efficiently.

**Brief Description of Drawings**

Fig. 1 is a schematic diagram showing an overall configuration of a fuel cell system according to one embodiment of the present invention;

Fig. 2 is a diagram showing relationships in terms of heat during charging and discharging in a fuel cell system according to one embodiment of the present invention;

Fig. 3 is a diagram showing an example of the amount of electric power consumed and the amount of electric power generated over a day;

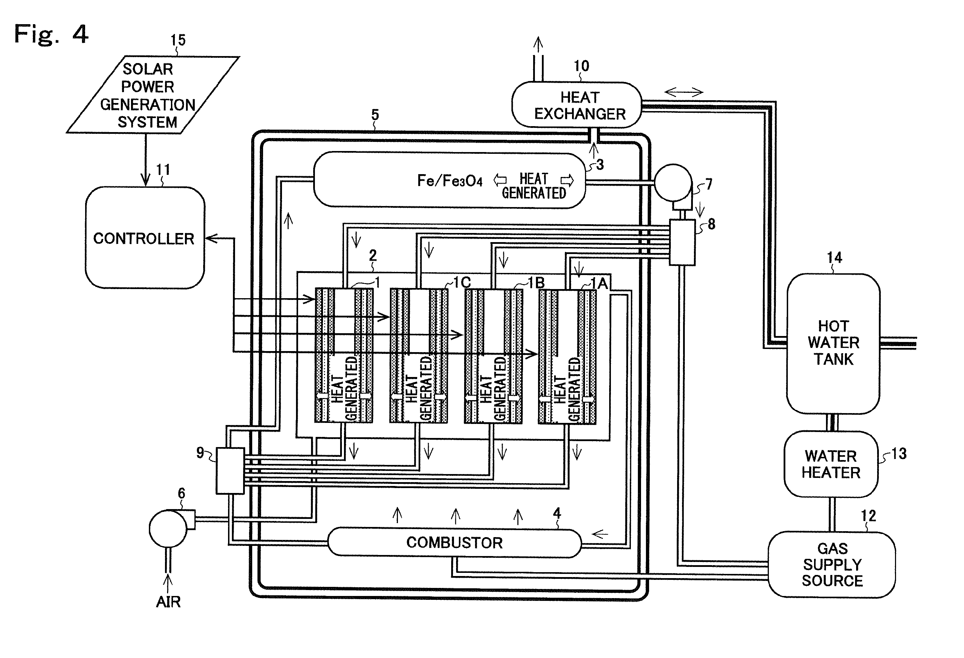

Fig. 4 is a diagram showing an example of operation of a fuel cell system according to one embodiment of the present invention;

Fig. 5 is a diagram showing another example of operation of a fuel cell system according to one embodiment of the present invention;

Fig. 6 is a diagram showing yet another example of operation of a fuel cell system according to one embodiment of the present invention; and

Fig. 7 is a diagram showing still another example of operation of a fuel cell system according to one embodiment of the present invention.

**Description of Embodiments**

Embodiments of the present invention will be described below with reference to the accompanying drawings. It should be understood that the embodiments presented below are in no way meant to limit the present invention.

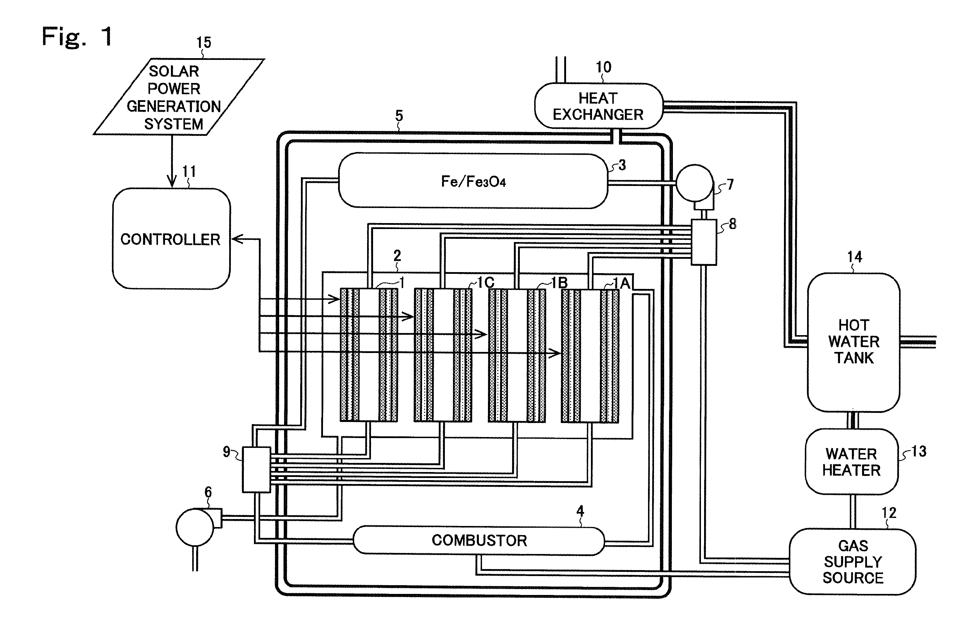

An overall configuration of a fuel cell system according to one embodiment of the present invention is shown in Fig. 1. The fuel cell system shown in Fig. 1 according to one embodiment of the present invention is an example where the present invention is applied to a household fuel-cell cogeneration system. However, a fuel cell system according to the present invention is not limited to a cogeneration system.

In the fuel cell system shown in Fig. 1 according to one embodiment of the present invention, a fuel cell container 2 which houses a plurality of tubular fuel cells 1, a fuel generation container 3 which houses a fuel-generating material, and a combustor 4 are provided inside a heat-insulated container 5. In this embodiment, the fuel cell container 2 houses four tubular fuel cells 1.

The fuel cell system shown in Fig. 1 according to one embodiment of the present invention is further provided with circulators 6 and 7, switches 8 and 9, a heat exchanger 10, and a controller 11.

In each of the tubular fuel cells 1, there are formed a fuel electrode 1A, an electrolyte 1B, and an air electrode 1C in layers in the named order from the inside of the tube. Fuel gas is passed inside the tube. Air is introduced into the fuel cell container 2, outside the tube, and the air is then discharged out of the fuel cell container 2 toward the combustor 4.

As the material for the electrolyte 1B, it is possible to use, for example, a solid oxide electrolyte that uses yttria-stabilized zirconia (YSZ). It is also possible to use a solid polymer electrolyte such as Nafion (a registered trademark of DuPont), a cation-conductive polymer, or an anion-conductive polymer. The materials just mentioned are not meant as any limitation; it is possible to use any material that has the properties required in the electrolyte in a fuel cell, such as a material that allows passage of hydrogen ions, a material that allows passage of oxygen ions, or a material that allows passage of hydroxide ions. In this embodiment, used as the electrolyte 1B is a solid oxide electrolyte using an electrolyte, such as yttria-stabilized zirconia (YSZ), that allows passage of oxygen ions or hydroxide ions, so that water is produced at the fuel electrode 1A during power generation.

The electrolyte 1B can be formed, in a case where it is a solid oxide electrolyte, by a chemical vapor deposition-electrochemical vapor deposition (CVD-EVD) process or the like and, in a case where it is a solid polymer electrolyte, by a coating process or the like.

The fuel electrode 1A and the air electrode 1C are each structured, for example, to be composed of a catalyst layer, which lies in contact with the electrolyte 1B, and a diffusion electrode, which is stacked on the catalyst layer. As the catalyst layer, it is possible to use, for example, platinum black, carbon black impregnated with a platinum alloy, or the like. As the material for the diffusion electrode of the fuel electrode 1A, it is possible to use, for example, carbon paper, a Ni-Fe cermet, a Ni-YSZ cermet, or the like. As the material for the diffusion electrode of the air electrode 1C, it is possible to use, for example, carbon paper, a La-Mn-O compound, a La-Co-Ce compound, or the like.

The fuel electrode 1A and the air electrode 1C can each be formed, for example, by a vapor deposition process or the like.

The fuel-generating material housed in the fuel generation container 3 is a material that produces a reducing substance (fuel gas) through a chemical reaction and that can be regenerated through the reverse reaction of the chemical reaction. As the fuel-generating material, it is possible to use, for example, a substance that produces hydrogen when oxidized (for example, Fe, a Mg alloy, or the like). In this embodiment, Fe is used, which produces hydrogen when oxidized.

With respect to the fuel-generating material, to increase its reactivity, it is preferable to give it as large a surface area per unit volume as possible. One way to give the fuel-generating material an increased surface area per unit volume is, for example, to form the base component of a fuel-generating agent into microparticles and mold them into the desired shape. Microparticles can be formed, for example, by milling larger particles with a ball mill or the like. The microparticles can be given a still larger surface area by developing cracks in them by a mechanical or other process, or by roughening their surface by an acid treatment process, an alkali treatment process, a blasting process, or the like.

In the fuel cell system shown in Fig. 1 according to one embodiment of the present invention, fuel gas is introduced into a tubular fuel cell 1 either across a route leading from the fuel generation container 3 via the circulator 7 or across a route leading from an external gas supply source 12. The switch 8, which comprises a plurality of switch valves, allows switching between the two routes for each of the tubular fuel cells 1 independently of one another. A well-known gas reformer can be provided between the gas supply source 12 and the switch 8.

Likewise, in the fuel cell system shown in Fig. 1 according to one embodiment of the present invention, waste gas from a tubular fuel cell 1 is supplied either across a route leading back to the fuel generation container 3 or across a route leading further to the combustor 4. The switch 9, which comprises a plurality of switch valves, allows switching between the two routes for each of the tubular fuel cells 1 independently of one another.

The switching by the switches 8 and 9 can be achieved through electrical switching by the controller 11 such that a sufficient amount of gas constantly circulates through the gas circuit across the tubular fuel cells 1 and the fuel generation container 3.

In the combustor 4, waste gas containing residual fuel that has passed through the tubular fuel cells 1, past the fuel electrode 1A, and/or fuel gas introduced from the external gas supply source 12 is mixed with waste gas containing oxygen that has passed inside the fuel cell container 2, past the air electrode 1C, and the mixture is combusted. The combusted gas is discharged out via the heat exchanger 10. The heat exchanger 10 heats water with the heat obtained by heat exchange, and an external water heater (boiler) 13 heats water by using the fuel gas from the external gas supply source 12. The water heated by heat exchange and the water heated by the external water heater 13 is stored in a hot water tank 14 as hot water for hot water supply. The controller 11 controls the entire fuel cell system, as by switching the tubular fuel cells 1 between power generation and electrolysis and controlling the switches 8 and 9, based on the amount of electric power used in the household, the amount of electric power generated by a household solar power generation system 15 installed in the household, the demand of hot water, the remaining amount of iron, etc.

Now, a description will be given of the operation that proceeds in a case where, with respect to a given tubular fuel cell 1, the switch 8 selects the route leading from the fuel generation container 3 via the circulator 7 and the switch 9 selects the route leading back to the fuel generation container 3. In this case, gas circulates between the given tubular fuel cell 1 and the fuel generation container 3.

In the tubular fuel cell 1, during power generation operation, a reaction expressed by formula (1) below takes place at the fuel electrode 1A.

$$H_2 + O^{2-} \rightarrow H_2O + 2e^- \qquad (1)$$

The electrons produced through the reaction expressed by formula (1) above travel through an external load (not shown) connected via the controller 11 to the tubular fuel cell 1 to reach the air electrode 1C, where a reaction expressed by formula (2) below takes place.

$$1/2O_2 + 2e^- \rightarrow O^{2-} \qquad (2)$$

The oxygen ions produced through the reaction expressed by formula (2) above pass through the electrolyte 1B to reach the fuel electrode 1A. Through repetition of the sequence of reactions described above, the tubular fuel cell 1 performs power generation operation. As will be understood from formula (1) above, during power generation operation, at the fuel electrode 1A, $H_2$ is consumed, and $H_2O$ is produced.

Based on formulate (1) and (2) above, the reaction in the tubular fuel cell 1 during power generation operation is expressed by formula (3) below. In formula (3) below, for example, at 600° C, $\Delta G$ = -199.7kJ/mol and $T\Delta S$ =-47.2kJ/mol.

$$H_2 + 1/2O_2 \rightarrow H_2O \qquad (3)$$

On the other hand, the fuel-generating material can consume the $H_2O$ produced at the fuel electrode 1A of the tubular fuel cell 1 during power generation operation, to produce $H_2$ through an oxidation reaction expressed by formula (4) below. The change in enthalpy $\Delta H$ in the reaction expressed by formula (4) below is negative, and the ejected energy $\Delta h_{Fe}$ during the oxidation reaction expressed by formula (4) below equals, for example at 600° C, 25.6 kJ per mol hydrogen.

$$3Fe + 4H_2O \rightarrow Fe_3O_4 + 4H_2 \qquad (4)$$

By contrast, during electrolysis operation of a tubular fuel cell 1, in a tubular fuel cell 1 that is supplied with electric power from an external power supply (not shown) connected via the controller 11 to the tubular fuel cell 1, an electrolysis reaction expressed by formula (5), which is the reaction reverse to that expressed by formula (3) above, takes place. Thus, at the fuel electrode 1A, $H_2O$ is consumed, and $H_2$ is produced. On the other hand, in the fuel-generating material, a reduction reaction expressed by formula (6) below, which is the reaction reverse to the oxidation reaction expressed by formula (4) above, takes place. Thus, the $H_2$ produced at the fuel electrode 1A of the fuel cell device is consumed, and $H_2O$ is produced. In formula (5) below, for example, at 600° C, $\Delta G$ = 199.7 kJ/mol and $T\Delta S$ = 47.2 kJ/mol. The absorbed energy $\Delta h_{Fe}$ during the reduction reaction expressed by formula (6) below equals, for example at 600° C, 25.6 kJ per mol hydrogen.

$$H_2O \rightarrow H_2 + 1/2O_2 \qquad (5)$$

$$Fe_3O_4 + 4H_2 \rightarrow 3Fe + 4H_2O \qquad (6)$$

When a chemical reaction takes place, an amount of energy which corresponds to the difference between the chemical energy (enthalpy) before the reaction and that after it is either ejected or absorbed. Specifically, when $\Delta H < 0$, the excess energy is ejected, and when $\Delta H > 0$, energy is absorbed from outside. In either case, energy is usually exchanged in the form of thermal energy, and thus a reaction where $\Delta H < 0$ is an exothermic reaction and a reaction where $\Delta H > 0$ is an endothermic reaction.

On the other hand, a change in enthalpy $\Delta H$ is given by formula (7) below based on a change in Gibbs free energy $\Delta G$, a change in entropy $\Delta S$, and an absolute temperature T.

$$\Delta H = \Delta G + T\Delta S \qquad (7)$$

When $\Delta G < 0$, the energy corresponding to the absolute value of $\Delta G$ can be extracted as work of electric energy or the like. By contrast, $T\Delta S$ represents energy that cannot be extracted as work; when $T\Delta S < 0$, heat is generated, and when $T\Delta S > 0$, heat is absorbed; thus, exchange of thermal energy takes place. Accordingly, the tubular fuel cell 1 generates heat during power generation operation and absorbs heat during electrolysis operation; on the other hand, the fuel-generating material generates heat during an oxidation reaction, and absorbs heat during a reduction reaction.

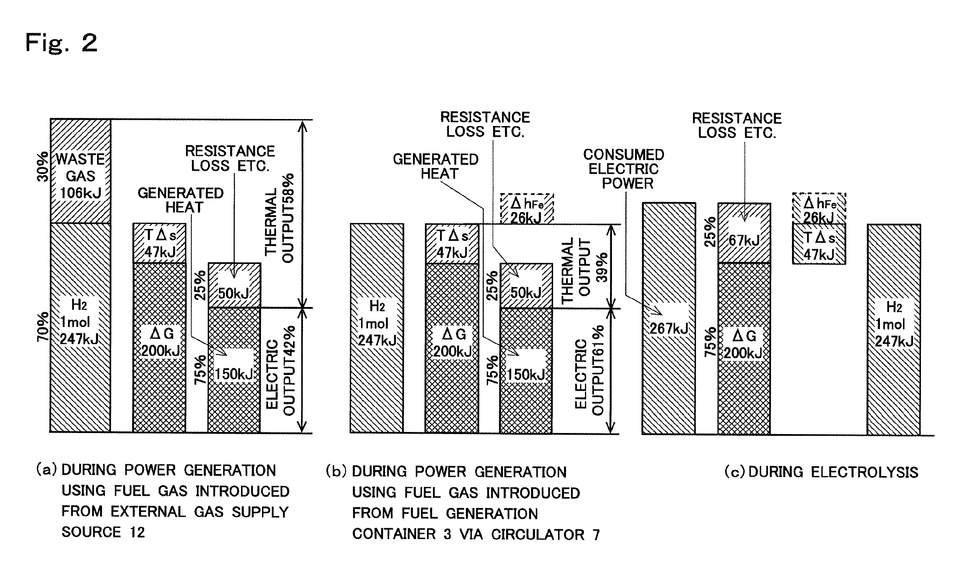

Fig. 2 is an overview of relationships in terms of heat during charging and discharging in a fuel cell system according to one embodiment of the present invention, assuming hydrogen at 600° C. The diagram at (a) deals with power generation using fuel gas introduced from the external gas supply source 12, the diagram at (b) deals with power generation using fuel gas introduced from the fuel generation container 3 via the circulator 7, and the diagram at (c) deals with electrolysis of water vapor.

As shown at (a), during power generation using fuel gas introduced from the external gas supply source 12, in a case where 1 mol of hydrogen is used for power generation, then, assuming that three out of ten parts of the fuel gas introduced from the external gas supply source 12 is discharged into the combustor 4, the heat of combustion equals 106 kJ, which is accounted for by about 0.4 mol of hydrogen. Here, 1 mol of hydrogen accounts for 247 kJ, of which 47 kJ is the portion $T\Delta s$ that becomes heat; thus the remaining 200 kJ is the portion $\Delta G$ that can be used as electric power. When, for discussion's sake, the efficiency of the tubular fuel cell 1 is assumed to be 75% with resistance-induced loss and the like taken into consideration, then out of $\Delta G$, which equals 200 kJ, 50 kJ becomes heat. Thus, overall, the electric output is about four parts out of ten, while the thermal output is about six parts. The efficiency of the tubular fuel cell 1 decreases the higher the electric current extracted from it, and increases the lower the electric power extracted from it; thus, when operated at an output well within the rated output, the tubular fuel cell 1 can be operated with higher efficiency.

As shown at (b), during power generation using fuel gas introduced from the fuel generation container 3 via the circulator 7, the waste gas from the tubular fuel cell 1 is not combusted but is fed back to the fuel generation container 3; thus, accordingly less heat is generated such that, overall, the electric output is about six parts out of ten, while the thermal output is about four parts. Here, oxidation of iron in the fuel generation container 3 also generates heat $\Delta h_{Fe}$.

As shown at (c), during electrolysis of water vapor, in a case where 1 mol of hydrogen is produced by electrolysis, giving water vapor the amount of energy ΔG necessary to produce 1 mol of hydrogen requires, taking the efficiency of the tubular fuel cell 1 into consideration, consumption of an electric power of 267 kJ. In addition, heat corresponding to TΔs is required. This heat, however, can be theoretically covered, when the efficiency of the tubular fuel cell 1 is 75%, by the heat generated by the tubular fuel cell 1 (67 kJ ascribable to resistance-induced loss and the like). Yet, considering the heat absorbed by the reduction of iron oxide in the fuel generation container 3, the rejection of heat into the air introduced into the heat-insulated container, and other factors, heating is after all necessary to maintain the reaction temperature.

Thus, during power generation using fuel gas introduced from the external gas supply source 12, a large amount of heat is generated, and even during power generation using fuel gas introduced from the fuel generation container 3 via the circulator 7, about half as much heat is generated. By contrast, during charging, when the tubular fuel cell 1 electrolyzes water vapor, heating is required. With a fuel cell system according to the present invention, during power generation using fuel gas introduced from the external gas supply source 12, for which output fluctuations are undesirable, it is possible to keep the amount of generated electric power constant and simultaneously to store the excess electric power by charging; meanwhile, part of the heat generated at the power-generating side is used in heat absorption at the charging side, and this allows efficient charging.

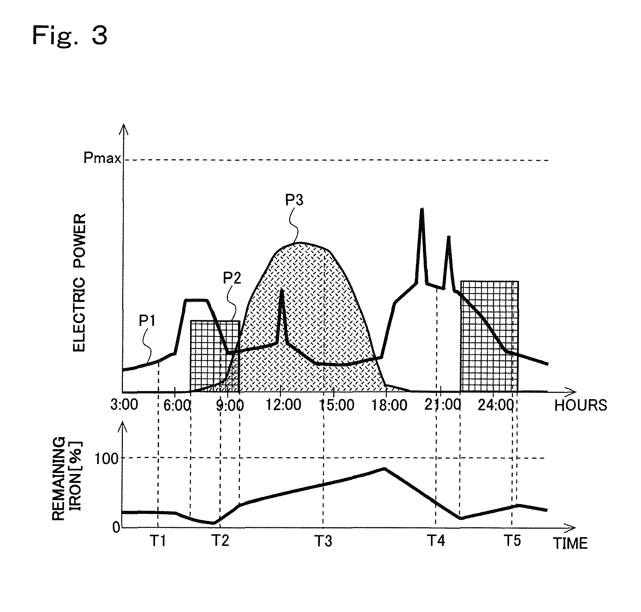

An example of the relationship between the amount of electric power consumed and the amount of electric power generated over a day is shown in Fig. 3. This example involves three modes of power generation: power generation by the solar power generation system 15, power generation by any tubular fuel cell 1 (discharging of a storage cell) using fuel gas introduced from the fuel generation container 3 via the circulator 7, and power generation by any tubular fuel cell 1 using fuel gas introduced from the external gas supply source 12. Ideally, the electric power generated by the solar power generation system 15 is stored in the fuel generation container 3 by electrically charging it so as to cover most of the electric power consumed over a day. In reality, however, the amount of electric power generated by the solar power generation system 15 fluctuates greatly depending on weather condition. This is the reason that the tubular fuel cells 1 are configured to be operable, in case of shortage of electric power, to generate electric power using fuel gas introduced from the external gas supply source 12. Moreover, the waste heat resulting from power generation by any tubular fuel cell 1 using fuel gas introduced from the external gas supply source 12 is used for hot water supply, and in case of shortage of hot water supplied, hot water is supplied directly from the external water heater 13 by use of fuel gas from the external gas supply source 12.

In Fig. 3, P1 indicates the amount of electric power consumed by the household, P2 indicates the amount of electric power generated by any tubular fuel cell 1 by use of fuel gas introduced from the external gas supply source 12, P3 indicates the amount of electric power generated by the solar power generation system 15, and Pmax indicates the maximum amount of electric power generated by the four tubular fuel cells 1 as a whole.

At time points T1 and T4, all the four tubular fuel cells 1 are generating electric power by using fuel gas introduced from the fuel generation container 3 via the circulator 7. Late at night and early in the morning, when the amount of electric power P1 consumed by the household is small, only part of the tubular fuel cells 1 may be operated; it is however preferable that, in preparation for abrupt rises in the amount of electric power P1 consumed by the household, all the tubular fuel cells 1 be operated (all of them be operated to generate power) so as to be ready to supply the maximum current capacity of the household. Here, the waste gas from the tubular fuel cells 1 is fed back to the fuel generation container 3 and is not supplied to the combustor 4; thus only the air discharged out of the fuel cell container 2 is discharged via the combustor 4 into the heat-insulated container 5. The heat generated in the tubular fuel cells 1 and in the fuel generation container 3 is collected by the heat exchanger 10 to be used for hot water supply.

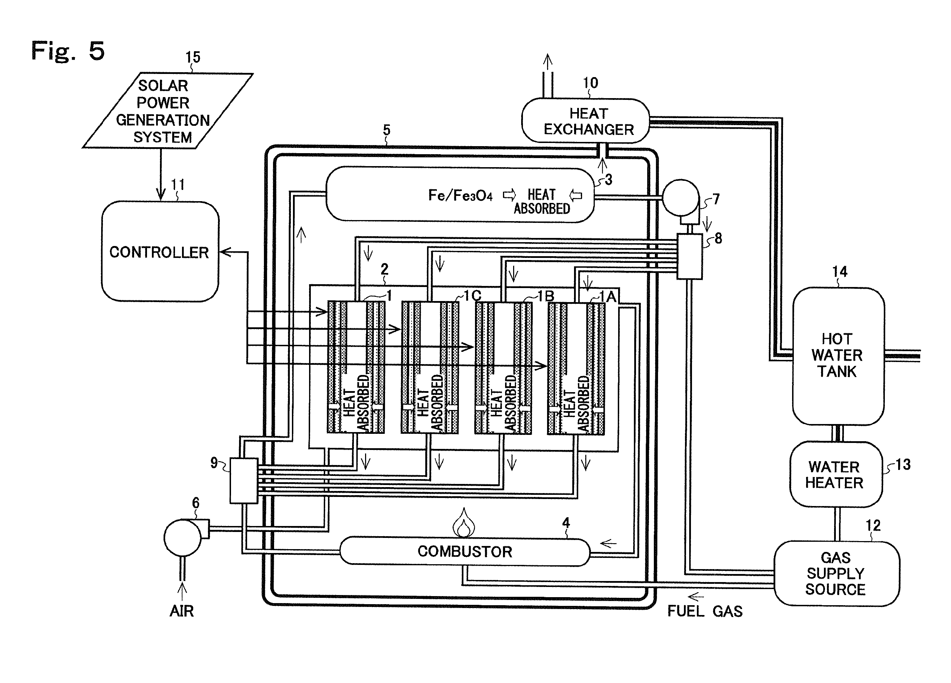

At time point T3, the amount of electric power P3 generated by the solar power generation system 15 is far larger than the amount of electric power P1 consumed by the household, and as shown in Fig. 5, all the tubular fuel cells 1 are operated (all of them are operated to electrolyze water vapor) so that the fuel-generating material housed inside the fuel generation container 3 is regenerated and is thereby electrically charged. To keep the temperature inside the heat-insulated container 5 at a predetermined temperature (for example, 600° C) suitable for the electrolysis reaction in the tubular fuel cell 1 and the reduction reaction in the fuel-generating material, heat needs to be supplied. This can be achieved, for example, by operating only part of the tubular fuel cells 1 in power generation mode, or by providing a heat-storing member for storing the heat generated during power generation. In the illustrated example, yet another method is adopted: fuel gas is supplied from the external gas supply source 12 into the combustor 4 and is combusted there.

In a fuel cell system according to one embodiment of the present invention, when a certain condition is fulfilled, such as when the amount of iron remaining in the fuel-generating material housed inside the fuel generation container 3 has dropped below a predetermined level, the controller 11 makes part of the tubular fuel cells 1 start power generation using fuel gas introduced from the external gas supply source 12. The amount of iron remaining in the fuel-generating material housed inside the fuel generation container 3 can be detected, for example, by measuring change in the weight of the fuel-generating material housed inside the fuel generation container 3.

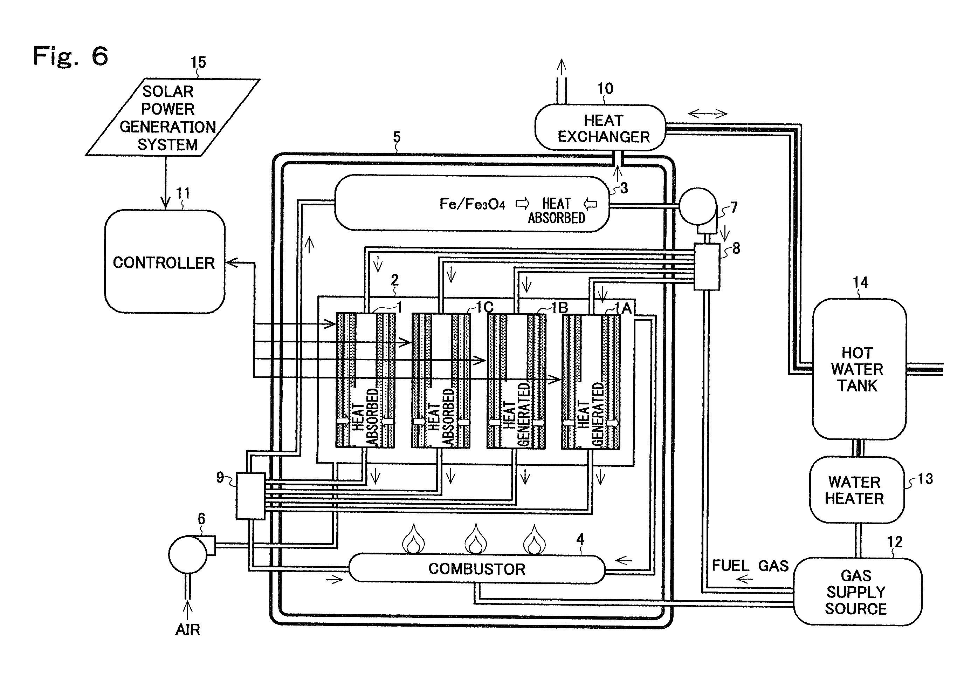

At time points T2 and T5, the sum of the amount of electric power P2 generated by any tubular fuel cell 1 generating electric power by using fuel gas introduced from the external gas supply source 12 and the amount of electric power P3 generated by the solar power generation system 15 is larger than the amount of electric power P1 consumed by the household, and thus excess electric power is being generated. This excess electric power is used to make the rest of the tubular fuel cells 1 electrolyte water (water vapor) to electrically charge the fuel generation container 3. Since all the tubular fuel cells 1 are housed inside a common heat-insulated container 5, the heat generated in a tubular fuel cell 1 generating electric power by using fuel gas introduced from the external gas supply source 12 transfers to a tubular fuel cell 1 in electrolysis operation. Moreover, the heat generated in a tubular fuel cell 1 generating electric power by using fuel gas introduced from the external gas supply source 12 also transfers to the fuel-generating material inside the fuel generation container 3 in the reduction reaction. This improves charging efficiency. Moreover, also the heat generated through combustion of the waste gas from any tubular fuel cell 1 generating electric power contributes to improved charging efficiency. In Fig. 6, the two right-hand tubular fuel cells 1 generate electric power by using fuel gas introduced from the external gas supply source 12, and the two left-hand tubular fuel cells 1 electrolyze the water vapor contained in the gas supplied from the fuel generation container 3 and feed the produced hydrogen back to the fuel generation container 3. The switches 8 and 9 are in a state where their respective switch valves are so switched that the gas flow passages through the two right-hand tubular fuel cells 1 are connected to the external gas supply source 12 and to the combustor 4, and the gas flow passages through the two left-hand tubular fuel cells 1 are connected to the fuel generation container 3. Thus, the two right-hand tubular fuel cells 1 are supplied with hydrogen gas from the external gas supply source 12, and waste gas containing hydrogen is fed to the combustor 4, where it is combusted. On the other hand, from the two left-hand tubular fuel cells 1, hydrogen gas produced through electrolysis of water (water vapor) is supplied to the fuel generation container 3, where the iron oxide inside the fuel generation container 3 is reduced, and the water (water vapor) produced through the reduction is supplied to the two left-hand tubular fuel cells 1.

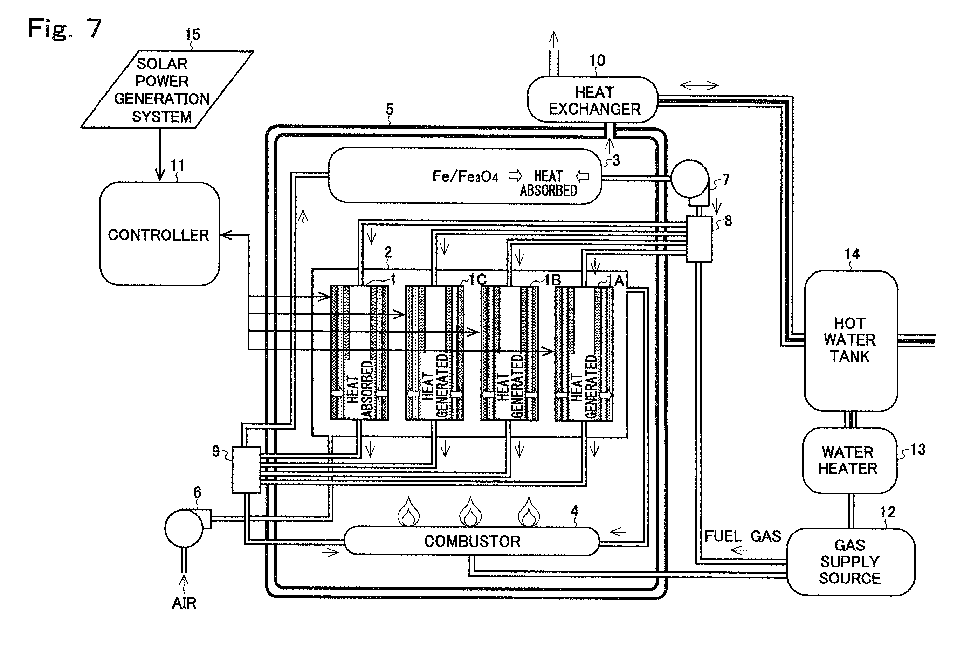

In a fuel cell system according to one embodiment of the present invention, how many of the tubular fuel cells 1 to distribute for power generation using fuel gas introduced from the external gas supply source 12 and for electrolysis can be varied according to the way the household consumes electric power (the demand for electric power). For example, in a situation where, in view of the way the household is consuming electric power and the amount of electric power P3 being generated by the solar power generation system 15 as currently observed, not much excess electric power is expected, the switches 8 and 9 switch the gas flow passages as shown in Fig. 7 such that the three right-hand tubular fuel cells 1 are operated for power generation and the other one tubular fuel cell 1 is operated for electrolysis. By contrast, in a situation where, in view of the amount of electric power P3 generated by the solar power generation system 15, a large amount of excess electric power is expected, an increased number of tubular fuel cells 1 can be operated for electrolysis.

The tubular fuel cells 1 operated for power generation and those operated for electrolysis can be arranged in any manner that is expected to provide maximum efficiency. For example, arranging the tubular fuel cells 1 operated for power generation and those operated for electrolysis alternately beside each other permits efficient transfer of heat, and hence efficient use of heat.

A preferred configuration is one where the maximum amount of electric power generated Pmax, which is the sum of the maximum amounts of electric power generated by the respective tubular fuel cells 1, is set large enough to cope with the maximum current capacity of the household, and where the above-mentioned distribution is variable. This helps eliminate redundancy and hence reduce the burden of equipment as compared with a configuration where there are separately provided a tubular fuel cell 1 dedicated to power generation using fuel gas introduced from the external gas supply source 12 and a tubular fuel cell 1 dedicated to electrolysis of water vapor contained in the gas supplied from the fuel generation container 3.

In the embodiment described above, a solid oxide electrolyte is used as the electrolyte 1B so that, during power generation, water is produced at the fuel electrode 1A. With this configuration, the gas circulation passage across which fuel is supplied from the fuel-generating material to a tubular fuel cell 1 provides connection to the fuel-generating material to permit water to be produced at the electrode side. This is advantageous to simplifying the design of, and reducing the size of, the device. It is also possible, as in the fuel cell disclosed in Japanese Patent Application Publication No. 2009-99491, to use as the electrolyte 1B a solid polymer electrolyte that allows passage of hydrogen ions. In that case, during power generation using the fuel gas discharged from the fuel-generating material, water is produced at the air electrode 1C, and this can be coped with by providing a flow passage for feeding the water to the fuel-generating material.

In the embodiment described above, all the tubular fuel cells 1 are housed inside a common heat-insulated container 5. Instead, each tubular fuel cell 1 may be housed inside a separate heat-insulated container, with additional provision of a heat-transferring structure for transferring heat among the interiors of the respective heat-insulated containers. The heat-transferring structure is achieved, for example, by coupling together the interiors of the respective heat-insulated containers with a metal with good heat conduction.

In the embodiment described above, only one fuel generation container is provided. Instead, a plurality of fuel generation containers may be provided so that the number of fuel generation containers generating fuel and the number of fuel generation containers regenerated can be switched. In the embodiment described above, four tubular fuel cells 1 are provided. Here, the number itself does not matter; the larger the number of tubular fuel cells 1 provided, the more flexibly it is possible to choose the combination of the number of tubular fuel cells 1 operated for power generation and the number of tubular fuel cells 1 operated for electrolysis. This makes it possible to choose a combination that can more suitably cope with fluctuations in the way electric power is being consumed and in the amount of power P3 generated by the solar power generation system 15 as currently observed.

The fuel cell system described above includes: a fuel-generating material that generates fuel through a chemical reaction and that can be regenerated through the reverse reaction of the chemical reaction; a first fuel cell that circulates gas to the fuel-generating material and back; and a second fuel cell that generates electric power by using fuel gas introduced from an external gas supply source, wherein the heat generated in the second fuel cell in power generation operation is transferred to the first fuel cell in electrolysis operation (a first configuration). There may be provided a single first fuel cell or a plurality of first fuel cells. Likewise, there may be provided a single second fuel cell or a plurality of second fuel cells.

With this configuration, when the electric power generated by the second fuel cell includes excess electric power, with this excess electric power, the first fuel cell can be made to perform electrolysis operation so that the fuel-generating material is regenerated and thereby electrical charging is achieved. Moreover, the heat generated in the second fuel cell in power generation operation is transferred to the first fuel cell in electrolysis operation and thus absorbing heat, and this improves charging efficiency.

In the fuel cell system of the first configuration described above, there may further be provided: a first switch that switches the first fuel cell into a fuel cell that generates electric power by using fuel gas introduced from the external gas supply source; and a second switch that switches the second fuel cell into a fuel cell that circulates gas to the fuel-generating material and back (a second configuration).

In the fuel cell system of the second configuration described above, the distribution between the number of fuel cells that generate electric power by using fuel gas introduced from the external gas supply source and the number of fuel cells that circulate gas to the fuel-generating material and back may be varied in accordance with the demand of electric power (a third configuration).

In the fuel cell system of any of the first to third configurations described above, the first fuel cell and the second fuel cell may be housed inside a common heat-insulated container (a fourth configuration).

In the fuel cell system of the fourth configuration described above, the fuel-generating material also may be housed inside the heat-insulated container in which the first fuel cell and the second fuel cell are housed.

In the fuel cell system of any of the configurations described above, the first fuel cell and the second fuel cell may each comprise a solid oxide fuel cell.

In the fuel cell system of any of the configurations described above, the heat generated in the second fuel cell in the power generation operation may be transferred also to the fuel-generating material in the reverse reaction.

With a fuel cell system of any of the configurations described above, even when excess electric power is generated during power generation using fuel gas introduced from outside, the excess electric power can be stored efficiently.

**List of Reference Signs**

| | |
|---|---|
| 1 | tubular fuel cell |
| 1A | fuel electrode |
| 1B | electrolyte |
| 1C | air electrode |
| 2 | fuel cell container |
| 3 | fuel generation container |
| 4 | combustor |
| 5 | heat-insulated container |
| 6,7 | circulator |
| 8,9 | switch |
| 10 | heat exchanger |
| 11 | controller |
| 12 | gas supply source |
| 13 | water heater |
| 14 | hot water tank |
| 15 | solar power generation system |

**Claims**

1.  A fuel cell system comprising:

    a fuel-generating material that generates fuel through a chemical reaction and that can be regenerated through a reverse reaction of the chemical reaction;
    a first fuel cell that circulates gas to the fuel-generating material and back; and
    a second fuel cell that generates electric power by using fuel gas introduced from an external gas supply source, wherein heat generated in the second fuel cell in power generation operation is transferred to the first fuel cell in electrolysis operation.

2.  The fuel cell system according to claim 1, further comprising:

    a first switch that switches the first fuel cell into a fuel cell that generates electric power by using fuel gas introduced from the external gas supply source; and
    a second switch that switches the second fuel cell into a fuel cell that circulates gas to the fuel-generating material and back.

3.  The fuel cell system according to claim 2,
    wherein distribution between the number of fuel cells that generate electric power by using fuel gas introduced from the external gas supply source and the number of fuel cells that circulate gas to the fuel-generating material and back is varied in accordance with demand of electric power.

4.  The fuel cell system according to claim 1,
    wherein the first fuel cell and the second fuel cell are housed inside a common heat-insulated container.

5.  The fuel cell system according to claim 4,
    wherein the fuel-generating material also is housed inside the heat-insulated container in which the first fuel cell and the second fuel cell are housed.

6.  The fuel cell system according to claim 1,
    wherein the first fuel cell and the second fuel cell each comprise a solid oxide fuel cell.

7.  The fuel cell system according to claim 1,
    wherein the heat generated in the second fuel cell in the power generation operation is transferred also to the fuel-generating material in the reverse reaction.

Fig. 1

# Fig. 2

(a) DURING POWER GENERATION
USING FUEL GAS INTRODUCED
FROM EXTERNAL GAS SUPPLY
SOURCE 12

(b) DURING POWER GENERATION
USING FUEL GAS INTRODUCED
FROM FUEL GENERATION
CONTAINER 3 VIA CIRCULATOR 7

(c) DURING ELECTROLYSIS

EP 2 790 257 A1

# Fig. 3

# Fig. 4

EP 2 790 257 A1

Fig. 5

SOLAR POWER GENERATION SYSTEM 15

CONTROLLER 11

HEAT EXCHANGER 10

Fe/Fe₃O₄ ⇨ HEAT ABSORBED 3

5

2

1

1C

1B

1A

HEAT ABSORBED

7

8

HOT WATER TANK 14

9

WATER HEATER 13

6

AIR

COMBUSTOR 4

GAS SUPPLY SOURCE 12

FUEL GAS

EP 2 790 257 A1

14

Fig. 6

SOLAR POWER GENERATION SYSTEM

CONTROLLER

HOT WATER TANK

WATER HEATER

GAS SUPPLY SOURCE

FUEL GAS

HEAT EXCHANGER

$Fe/Fe_3O_4$ ⇦ HEAT ABSORBED

HEAT GENERATED

HEAT GENERATED

HEAT ABSORBED

HEAT ABSORBED

COMBUSTOR

AIR

## Fig. 7

SOLAR POWER GENERATION SYSTEM 15

CONTROLLER 11

HEAT EXCHANGER 10

Fe/Fe₃O₄ ⇒ HEAT ABSORBED 3

5

7

8

2

1

1C

1B

1A

HEAT ABSORBED

HEAT GENERATED

HEAT GENERATED

HEAT GENERATED

9

6

AIR

COMBUSTOR 4

HOT WATER TANK 14

WATER HEATER 13

GAS SUPPLY SOURCE 12

FUEL GAS

EP 2 790 257 A1

## INTERNATIONAL SEARCH REPORT

| | International application No. |
|---|---|
| | PCT/JP2012/077930 |

A. CLASSIFICATION OF SUBJECT MATTER
*H01M8/06*(2006.01)i, *C25B1/04*(2006.01)i, *H01M8/04*(2006.01)i, *H01M8/12*
(2006.01)i, *H01M8/10*(2006.01)n

According to International Patent Classification (IPC) or to both national classification and IPC

B. FIELDS SEARCHED

Minimum documentation searched (classification system followed by classification symbols)
H01M8/06, C25B1/04, H01M8/04, H01M8/12, H01M8/10

Documentation searched other than minimum documentation to the extent that such documents are included in the fields searched
|  |  |  |  |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 9-115537 A  (Nippon Telegraph and Telephone Corp.), 02 May 1997 (02.05.1997), claims 2 to 4; paragraphs [0021] to [0023]; fig. 3 (Family: none) | 1-7 |
| A | JP 2002-56880 A  (The Kansai Electric Power Co., Inc.), 22 February 2002 (22.02.2002), claims 1, 7; paragraphs [0027] to [0032]; fig. 5 (Family: none) | 1-7 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 December, 2012 (04.12.12) | 18 December, 2012 (18.12.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

## INTERNATIONAL SEARCH REPORT

| International application No. |
| --- |
| PCT/JP2012/077930 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2010-232165 A (Toshiba Corp.), 14 October 2010 (14.10.2010), claims 1, 3; paragraphs [0049] to [0050]; fig. 6, 8 & WO 2010/092831 A1 & DE 112010000826 T | 1-7 |
| A | JP 2003-47175 A (Toshiba Engineering Corp.), 14 February 2003 (14.02.2003), claims 1, 2; fig. 1, 2 (Family: none) | 1-7 |
| A | JP 2008-217999 A (Nippon Oil Corp.), 18 September 2008 (18.09.2008), claims 1, 5; fig. 1 (Family: none) | 1-7 |
| A | WO 2011/30625 A1 (Konica Minolta Holdings, Inc.), 17 March 2011 (17.03.2011), claims 1, 4; paragraph [0035]; fig. 1 & JP 4816816 B & EP 2477265 A1 | 1-7 |
| A | JP 2008-94645 A (Uchiya Thermostat Co., Ltd.), 24 April 2008 (24.04.2008), paragraphs [0022] to [0025] (Family: none) | 1-7 |
| A | JP 2006-143560 A (Kiyoshi OTSUKA), 08 June 2006 (08.06.2006), paragraphs [0032] to [0043]; fig. 2, 3 (Family: none) | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007273252 A

- JP 2009099491 A

**Non-patent literature cited in the description**

- A 'Power-Outage Spontaneous Operation System' Developed for 'ENE-FARM'-line Household Fuel Cells. SEIKO ELECTRIC Co., Ltd, 09 November 2011